# EUROPÄISCHE PATENTANMELDUNG

(11) **EP 1 983 628 A2**
(43) Veröffentlichungstag der Anmeldung: **22.10.2008**
(21) Anmeldenummer: 08405109.3
(22) Anmeldetag: 18.04.2008
(51) Int. Cl.: H02G 3/12

(54) **Elektro-Leerdose und Verfahren zum Anordnen einer Elektro-Leerdose in einer Wärmedämmschicht**

(30) Priorität: 18.04.2007 CH 6332007; 24.08.2007 CH 13282007
(71) Anmelder: MAAG, Ulrich, 8184 Bachenbülach (CH)
(72) Erfinder: MAAG, Ulrich, 8184 Bachenbülach (CH)
(74) Vertreter: Walder, Martin Bernhard

(57) **Zusammenfassung**

Die Erfindung betrifft eine Elektro-Leerdose (11) mit einem Dosenraum (19), der von einer Wandung (27) umgeben und an seinem Grund einen rückseitigen Boden (29) aufweist. Die Leerdose (11) besitzt eine frontseitige Zugangsöffnung (17) zu diesem Dosenraum (19), um welche Zugangsöffnung (17) herum eine Befestigungsplatte (21) vorhanden ist und Befestigungsbereiche (21) ausgebildet sind. An den Befestigungsbereichen (21) kann eine Montageplatte eines Einbauteils befestigt werden. Die Erfindung zeichnet sich dadurch aus, dass die Befestigungsbereiche die Zugangsöffnung (17) ringförmig umschliessen und durch eine Vielzahl von Löchern (37) in der ringförmigen Befestigungsplatte gebildet sind, welche Löcher (37) siebartig oder wabenartig angeordnet sind. Vorteil dieser Ausbildung des Befestigungsbereichs ist, dass die Leerdose (11) in beliebiger Stellung in eine abgestufte Bohrung in einer Wärmedämmschicht eingepresst werden kann. Die Befestigungsplatte (21) füllt die äussere Stufe der Bohrung, so dass die Wärmedämmschicht bis an die Zugangsöffnung heran verputzt werden kann. Eine Montageplatte kann horizontal und vertikal möglichst ausgerichtet werden und im Befestigungsbereich mit der Befestigungsplatte verschraubt werden. Dabei wird die Montageplatte in denjenigen Löchern festgemacht, die dabei zufällig von der Schraube gefunden werden.

## Beschreibung

Die Erfindung betrifft eine Unterputz-Elektro-Leerdose, die geeignet ist, in Aussenwärmedämmschichten von Fassadenverbundsystemen angeordnet zu werden, für die Aufnahme von Schaltern, Klingeln, Sensoren, Elektroverteilern, Steckereinbauten, Lampenstellen und anderen Elektroeinbauteilen.

Es ist bekannt, bei Aussenwärmedämmschichten Elektro-Leerdosen aus Kunststoff auf Unterbauten zu Montieren, elektrische Leitungen und Kabel durch die Unterbauten in die Leerdose zu führen, die Wärmedämmschicht eines Fassadenverbundsystems an diese Unterbauten und die Leerdose heran zu führen und durch Ausschneiden an diese anzupassen, und den zwischen Leerdose und Wärmedämmschicht entstehenden Hohlraum auszuschäumen.

Aus der DE 1 665 693 ist eine Dose aus Thermoplast zum Einlassen in Fertigbauteilen, vorzugsweise Beton bekannt. Diese Elektro-Leerdose besitzt einen Dosenraum, der von einer Wandung umgeben ist und an seinem Grund einen rückseitigen Boden aufweist. Die Leerdose besitzt eine frontseitige Zugangsöffnung zu diesem Dosenraum, um welche Zugangsöffnung herum ein Kragen vorhanden ist, der zur Auflage der Dose auf der Oberfläche des Schalungselements eines Betonteils dient. Dieser Kragen wird beim Ausschalen des Betonteils entlang einer Sollbruchstelle von der in dem Betonteil verbleibenden Leerdose abgetrennt. Die Wandung der Leerdose ist in einem ersten, an den Kragen anschliessenden Bereich im Wesentlichen zylindrisch ausgebildet und bildet in einem dem Boden näheren Bereich der Wandung einen Kegelstumpf.

Nachteilig an dieser Dose ist, dass keine definierte Befestigungsbereiche vorliegen, an denen ein Einbauteil an der Leerdose befestigt werden kann.

Aus der DE 196 09 711 ist eine Elektrische Hohlwanddose bekannt. Diese Hohlwanddose besitzt einen Dosenraum, der von einer Wandung umgeben ist und an seinem Grund einen rückseitigen Boden aufweist. Die Dose besitzt eine frontseitige Zugangsöffnung zu diesem Dosenraum, um welche Zugangsöffnung herum ein Abstützflansch ausgebildet ist. An zwei einander gegenüberliegenden Stellen sind Befestigungsstellen mit je einem Loch vorhanden, in welchen Löchern eine Montageplatte eines Einbauteils mit je einer Schraube befestigt werden kann. Die Wandung ist in einem ersten, an den Abstützflansch anschliessenden Bereich im Wesentlichen zylindrisch ausgebildet und bildet in einem dem Boden näheren Bereich der Wandung einen Kegelstumpf.

Nachteilig an dieser Dose ist, dass die Dose in genau ausgerichteter Stellung in ein Bauteil eingelassen werden muss, wenn die Montageplatte horizontal und vertikal ausgerichtet sein soll.

Die Erfindung stellt sich zur Aufgabe, eine Leerdose für den Einbau in eine Aussenwärmedämmung zu schaffen, die keine Unterbauten benötigt, und damit ein Verfahren zum Versetzten einer Leerdose zu schaffen, das einfach und sicher ist und mit dem die Leerdose sauber und hohlraumfrei in eine Wärmedämmschicht versetzt werden kann. Der Arbeitsablauf für die Montage und das Einführen von elektrischen Leitungen in die Leerdose soll einfach sein, die Leerdose soll nicht in die Wärmedämmschicht eingeschäumt werden müssen.

Diese Aufgabe wird erfindungsgemäss durch die unabhängigen Ansprüche gelöst.

Eine erfindungsgemässe Elektro-Leerdose besitzt in bekannter Art einen Dosenraum, der von einer Wandung umgeben ist und an seinem Grund einen rückseitigen Boden aufweist. Die Leerdose besitzt eine frontseitige Zugangsöffnung zu diesem Dosenraum, um welche Zugangsöffnung herum eine Befestigungsplatte vorhanden ist und Befestigungsbereiche ausgebildet sind. In den Befestigungsbereichen kann eine Montageplatte eines Einbauteils befestigt werden.

Die erfindungsgemässe Leerdose zeichnet sich dadurch aus, dass die Befestigungsbereiche die Zugangsöffnung ringförmig umschliessen und durch die ringförmige Befestigungsplatte gebildet sind. Vorteil dieser Ausbildung des Befestigungsbereichs ist, dass die Leerdose in beliebiger Stellung in eine abgestufte Bohrung in einer Wärmedämmschicht eingepresst werden kann. Die Befestigungsplatte füllt die äussere Stufe der Bohrung, so dass die Wärmedämmschicht bis an die Zugangsöffnung heran verputzt werden kann. Eine Montageplatte kann horizontal und vertikal ausgerichtet und im Befestigungsbereich mit der Befestigungsplatte verschraubt werden. Dabei wird die Montageplatte in an derjenigen Stelle der Befestigungsplatte festgemacht, welche die Schraube zufällig trifft.

Die Befestigungsplatte weist zweckmässigerweise eine minimale Materialstärke von 3 mm, vorzugsweise 4 mm auf, damit die Schrauben für die Befestigung der Montageplatte genügend Halt darin finden.

In der Befestigungsplatte ist zweckmässigerweise eine Struktur ausgebildet, insbesondere eine Lochung. Die Struktur kann konzentrisch kreisförmig oder radial ausgebildet sein. Sie kann Rippen zwischen Furchen, Zapfen zwischen Kreuztälern, oder Löcher in einer sieb- oder wabenartigen Struktur umfassen. Diese Struktur oder Lochung hat mehrere Vorteile. Einmal können Schrauben für die Befestigung von Montageplatten von Einbauteilen durch die dünneren Stellen oder Löcher in der Befestigungsplatte leichter hindurchgeschraubt werden. Diese Stellen können in einem Kreis angeordnet und in einer Anzahl vorhanden sein, die durch 4 teilbarist. Sie können aber auch in beliebiger Anordnung ausgebildet sein. Weiter dienen die Löcher und Furchen aber auch der Reduktion des für die Befestigungsplatte notwendigen Materials und dazu, dass die aus Kunststoff gegossene Befestigungsplatte beim Aushärten des Materials lediglich geringen oder keinen Verzug erfährt. Die Lochung oder Furchung hat in erster Linie spritztechnische Vorteil und dient erst sekundär der leichteren Befestigung von Schrauben in der Befestigungsplatte.

Vorteil einer zur Aussenseite hin gerichteten Struktur ist, dass der Verputz besser an der Befestigungsplatte der Leerdose haftet. Vorteil einer zur Innenseite hin gerichteten Struktur ist, dass die Taktzeit des Spritzgussverfahrens erhöht werden kann, wenn aussen eine Deckschicht von ca. 1 mm verbleibt. Bevorzugt wird deshalb eine Struktur auf der Innenseite, die auf der Aussenseite mit einer ca. 1 mm dicken Deckschicht zusammengebunden ist. Diese Deckschicht ist auf der Aussenseite rau ausgebildet, damit die Putzbeschichtung einwandfrei haftet. Eine undurchbrochene Deckschicht an der Befestigungsplatte hat auch den Vorteil, dass deren Verklebung ohne Verschmutzung der Hände möglich ist.

Die Wandung der Dose kann in einem ersten, an die Befestigungsbereiche anschliessenden Bereich im Wesentlichen zylindrisch und in einem dem Boden näheren Konus-Bereich kegelstumpfförmig ausgebildet sein. Dies erlaubt, die Dose in eine Bohrung einzusetzen und diese Bohrung aufzuweiten, so dass mit dem ersten Bereich ein Klemmsitz erreicht wird.

Der Durchmesser des Bodens entspricht zweckmässigerweise dem Durchmesser der Bohrung, in die die Leerdose eingesetzt werden soll oder ist kleiner als dieser. Die Aufweitung des Bohrungsquerschnitts durch die Leerdose soll in einem Bereich von wenigstens 3 mm liegen. Eine flächige Aufweitung soll maximal 7mm betragen. Eine Aufweitung an einzelnen Stellen von 10 bis 14 mm ist möglich.

Diese Aufweitung an einzelnen Stellen kann dadurch erreicht werden, dass die Querschnittform der Leerdose vieleckig ist. Es können auch Rippen vorgesehen sein. Sind Rippen vorhanden, kann die Querschnittform der Dose rotationssymmetrisch sein, was die Herstellung der Form vereinfacht.

Bei einer vorgesehenen exakten Abstimmung des Setzwerkzeugs auf die Leerdosenabmessungen kann die Leerdose ohne Befestigungsmittel in der Bohrung befestigt werden. Durch einstecken entsteht eine Pressung des Materials der Wärmedämmschicht, welche zu einem genügenden Halt der Leerdose in der Wärmedämmschicht führt.

Vorteilhaft sind die Befestigungsbereiche auf einer ringförmigen Befestigungsplatte ausgebildet, welche Befestigungsplatte die Zugangsöffnung ringförmig umschliesst. Dies erlaubt, die Leerdose in eine abgestufte Bohrung einzusetzen, wobei die ringförmige Befestigungsplatte flächenbündig mit der Oberfläche der Wärmedämmschicht innerhalb des grösseren Durchmessers der gestuften Bohrung untergebracht ist. Die wenigstens 3mm, vorzugsweise wenigstens 4 mm dicke Befestigungsplatte ist ebenfalls als Kegelstumpf ausgebildet, so dass die zweite Stufe der Bohrung ebenfalls ausgeweitet wird durch den Umfang der Befestigungsplatte und deshalb satt an dieser anliegt.

Bei einer vorgesehenen exakten Abstimmung der Durchmesser und Bohrtiefen des Setzwerkzeugs auf die Abmessungen der Leerdose ergibt sich ein äusserst sauberes Versetzbild. Die Befestigungsplatte sitzt satt in der äusseren Stufe der Bohrung. Eine Fasernetzarmierung auf der Wärmedämmplatte und ein Aussenputz kann bis an die Zugangsöffnung der Leerdose herangeführt werden.

Vorteilhaft ist die Wandung auch im ersten Bereich nicht exakt zylindrisch, sondern leicht konisch (ca.1 Grad) ausgebildet und weist rückseitig einen geringeren Durchmesser auf als frontseitig. Dieser Durchmesser-Unterschied im ersten Bereich der Wandung liegt zweckmässigerweise bei 1 bis 3 mm über eine Länge des Bereichs von etwa 35 mm bis 65 mm. Diese Differenz ist nicht nur für die Herstellung, insbesondere die Herauslösung der Leerdose aus der Spritzgussform nützlich, sondern hat den Vorteil, dass die Leerdose beim Einführen in die kreiszylindrische Bohrung zunehmend gegen die Bohrungswandung presst. Dadurch entsteht eine Konusklemmung, mit der relativ grosse Auszugskräfte erreicht werden.

Um diese Auszugskräfte zusätzlich zu erhöhen können an der Wandung gewindeähnliche Rippen oder Kanten ausgebildet sein, die gewendelt sind und nach aussen stehen. Diese Rippen oder Kanten pressen lokal auf das Material der Wärmedämmschicht. Die Rippen oder Kanten bewirken, dass die Auszugskräfte vergrössert werden können. Falls gewindeähnliche Rippen ausgebildet sind, sind zweckmässigerweise auch Kraftangriffsformen, z. B. Löcher, in der Wandung oder besser in der Befestigungsplatte ausgebildet. In diesen kann ein Werkzeug zum Eindrehen der Leerdose Eingriff nehmen.

Eine bevorzugte Ausführungsform besitzt eine abgestufte Wandung mit vier Wandungsbereichen. Anschliessend an die Befestigungsplatte erstreckt sind der erste und im Wesentlichen zylindrische Wandabschnitt. An diesen anschliessend ist ein erster Konusabschnitt ausgebildet. Zwischen dem ersten Konusabschnitt und einem zweiten, an den Boden anschliessenden Konusabschnitt ist ein zweiter im Wesentlichen zylindrischen Wandabschnitt ausgebildet. Dieser zweite zylindrische Wandabschnitt hat einen geringeren Durchmesser als der erste. Der Aussendurchmesser des zweiten zylindrischen Abschnitts ist geringer als der Innendurchmesser des ersten zylindrischen Abschnitts ausgebildet, damit eine möglichst raumsparende Stapelung der Leerdosen erreicht wird.

Zweckmässigerweise ist im Boden der Leerdose wenigstens eine Rohr- bzw. Kabeleinführungsstelle ausgebildet. Diese kann zentral oder dezentral ausgebildet sein. Sie kann auch in der Wandung ausgebildet sein. An der Kabeleinführungsstelle ist der Boden, oder die Wandung, zweckmässigerweise als eine kreisförmige Membrane mit axialen und radialen Sollbruchstellen ausgebildet. Die Materialstärke an dieser Stelle liegt demnach zwischen 0,07 und 0,25 mm. Eine solche Membrane ist relativ leicht durchstossbar und schliesst praktisch dicht an die hindurchgeführten Rohre oder Kabel an. Es sind zweckmässigerweise in der Membrane axial radial verlaufende Sollbruchstellen ausgebildet, entlang welchen die Membrane unter Belastung aufreissen kann. Dadurch passt sich die Öffnung in der Membrane beim Durchführen von Leitungen deren Durchmesser an. Vorteil von mit Membranen vollständig verschlossenen Kabeleinführungsstellen ist, dass der Kleber beim Verkleben der Dose nicht ins Innere eindringt.

Zweckmässigerweise wird diese erfindungsgemässe Dose mit einem auf ihre Masse angepassten Setzwerkzeug versetzt. Ein solches Setzwerkzeug für eine Leerdose besitzt deshalb einen Tiefenanschlag, damit die Bohrung nicht zu tief ausgeführt wird und sodann ein Hohlraum gebildet ist hinter der Dose. Das Setzwerkzeug besitzt einen abgestuften Fräskopf mit einer ersten Schneide mit einem ersten Durchmesser und einer ersten Tiefe. Mit dieser ersten Schneide wird der Raum zum Einsetzen der Leerdose aus der Wärmedämmschicht ausgeschabt und ausgeschnitten. Es besitzt eine zweite Schneide mit einem zweiten, grösseren Durchmesser und einer zweiten, geringeren Tiefe. Mit dieser zweiten Schneide wird ein lediglich wenige Millimeter tiefe zweite Stufe geschaffen, in welcher die Befestigungsbereiche, bzw. die Befestigungsplatte der Leerdose Raum finden.

Ein solches Setzwerkzeug kann mit einem Einspannteil zum Einspannen in ein Einspannfutter einer Handbohrmaschine ausgerüstet sein, oder es kann mit einem eigenen elektrischen Antriebsorgan ausgerüstet sein.

Die oben beschriebene Leerdose und das dazugehörige Setzwerkzeug erlauben es, das Versetzen von Leerdosen in Wärmedämmschichten zu vereinfachen. Zur Anordnung einer Leerdose in einer Wärmedämmschicht wird erfindungsgemäss mit einem Setzwerkzeug eine kreiszylindrische Bohrung mit einem der Leerdose angepassten Durchmesser und einer der Leerdose angepassten Tiefe in die Wärmedämmschicht eingebracht und danach die Leerdose in diese Bohrung in der Wärmedämmschicht eingepresst. Diese Verfahren ist so einfach, dass es erstaunlich ist, dass dieses Verfahren bisher bei Wärmedämmschichten nicht angewendet wurde. Im Unterschied zu dem Versetzen von Leerdosen in beispielsweise Backsteinwänden, wird bei diesem Verfahren die Elastizität der Wärmedämmschicht genutzt, so dass die Leerdose nicht zwingend verklebt zu werden braucht. Eine Füllmasse zwischen Bohrungsumfang und Leerdose ist nicht notwendig, da kein Zwischenraum vorhanden ist.

Vorteilhaft wird eine abgestufte Bohrung eingebracht. Diese zweite Stufe schafft Raum für die Befestigungsbereiche an der Leerdose. Diese können dadurch flächenbündig mit der Oberfläche der Wärmedämmschicht versetzt werden. Vorteilhaft wird eine Leerdose mit ringförmiger Befestigungsplatte in die abgestufte Bohrung eingesetzt, so dass diese zweite Stufe der Bohrung gefüllt ist mit der Befestigungsplatte.

Obschon andere Abläufe denkbar sind, wird davon ausgegangen, dass die Leerdose gemäss folgendem Ablauf versetzt wird und eine Stromleitung in die Leerdose geführt wird:
Zuerst wird eine Elektroleitung auf einem Untergrund verlegt. Dann wird die Elektroleitung durch eine Wärmedämmschichtplatte hindurchgeführt und diese Wärmedämmschichtplatte auf diesem Untergrund befestigt. Danach wird die Bohrung in dieser oder einer benachbarten Wärmedämmschichtplatte und neben der Durchführung der Elektroleitung ausgeführt. Nun ist direkt neben der Bohrung die Elektroleitung aus der Dämmschicht herausgeführt. Das Material der Wärmedämmschicht wird nun deshalb zwischen der Elektroleitung und der Bohrung aufgeschnitten oder - z.B. indem das Kabel in die Bohrung hinein gerissen wird - aufgebrochen. Die Elektroleitung wird bei dieser Gelegenheit oder anschliessend in die Bohrung gebracht. Vorher oder nachher wird sie auch in die Leerdose eingeführt. Schliesslich wird die Leerdose in die Bohrung gedrückt, während die Elektroleitung durch die Öffnung hindurch in der Leerdose gezogen wird. Nun kann an der Befestigungsplatte um die Zugangsöffnung der Leerdose jede beliebige Montageplatte angeschraubt werden. Es können Einbauteile nach Bedarf in die Leerdose eingebaut werden. Die Leerdose hält unter Umständen ohne weitere Vorkehren in der Bohrung. Sie kann dennoch mit einem pastösen PU-Kleber in die Bohrung geklebt werden. Verputz kann bis an die Zugangsöffnung heran aufgetragen werden. Jegliches Versetzen von Unterkonstruktionen, Anschliessen an Unterkonstruktionen und Schäumen von Zwischenräumen entfällt.

Ein bevorzugtes Verfahren zur Anordnung einer Leerdose in einer Wärmedämmschicht zeichnet sich dadurch aus, dass mit einem Setzwerkzeug eine abgestufte, kreiszylindrische Bohrung an einer für die Leerdose vorgesehenen Stelle in eine Wärmedämmplatte eingebracht wird. Eine erste Stufe besitzt einen der Leerdose angepassten Durchmesser und eine der Leerdose angepasste Tiefe. Eine zweite Stufe besitzt einen der Befestigungsplatte angepassten Durchmesser und eine dieser Befestigungsplatte angepasste Tiefe. Danach wird die Leerdose in diese Bohrung in der Wärmedämmplatte eingepresst. Und zwar wird zunächst eine Stelle am Gebäude bezeichnet, an der die Elektrodose später vorhanden sein soll. Danach wird das Kabel oder werden die Kabel an diese Stelle bezogen und wenigstens provisorisch dort befestigt. Danach wird das Gebäude soweit an eine bezeichnete Stelle heran mit Wärmedämmplatten isoliert, bis eine nächste Wärmedämmplatte diese bezeichnete Stelle überdecken wird.

Dann wird die bezeichnete Stelle in Bezug auf die ihr benachbarten Wärmedämmplatten eingemessen und die Stelle auf die als nächste zu versetzende Wärmedämmplatte übertragen. An dieser Stelle wird nun die Leerdose wie beschrieben angebracht und die Wärmedämmplatte durch die Leerdose hindurch durchstossen. Danach wird Kleber auf die Gebäudewand oder die Wärmedämmplattenrückseite aufgetragen, das oder die Kabel an der durchstossen Stelle von hinten durch die Wärmedämmplatte und die Leerdose hindurch gesteckt. Während dem Aufkleben der Wärmedämmplatte auf das Gebäude wird das Kabel aus der Leerdose herausgezogen. Abweichend davon kann die Leerdose auch erst dann in die Bohrung gesetzt werden, wenn die Wärmedämmplatte verlegt ist. Dann wird das Kabel durch die Durchtrittstelle im Boden der Dose hindurch gesteckt, eventuell Kleber auf die Leerdose aufgetragen oder in die Bohrung eingebracht und während dem Einstecken und der Leerdose das Kabel durch die Leerdose hindurch gezogen.

Bei der Montage einer Montageplatte mit einem Einbauteil werden die dazu verwendeten Schrauben an der gewünschten Stelle neben der Zugangsöffnung eingeschraubt. Die Schraube durchdringt die in der Regel vorhandene Putzschicht und findet ein Loch in der Befestigungsplatte.

Kurzbeschreibung der Figuren:
- Fig. 1: zeigt ein perspektivische Ansicht einer erfindungsgemässen Leerdose von der Rückseite her.
- Fig. 2: zeigt ein perspektivische Ansicht einer erfindungsgemässen Leerdose von der Frontseite her.
- Fig. 3: zeigt eine Querschnitt durch eine Leerdose gemäss Figuren 1 und 2.
- Fig. 4: zeigte einen Detailschnitt an der Stelle BB der Figur 3.
- Fig. 5: zeigt eine Front-Ansicht der Leerdose.
- Fig. 6: zeigt eine Seiten-Ansicht der Leerdose.
- Fig. 7: zeigt eine Detaildarstellung des Ausschnittes A in der Schnittzeichnung gemäss Figur 3.
- Fig. 8: zeigt einen Detail-Ausschnitt der Stelle C aus Figur 7.
- Fig. 9: zeigt eine perspektivische Ansicht eines Setzwerkzeugs für das Vorbereiten eines Bohrung in einer Wärmedämmschicht zur Aufnahme einer erfindungsgemässen Leerdose.
- Fig. 10: zeigt eine perspektivische Ansicht eines Setzwerkzeugs für das Vorbereiten eines Bohrung in einer Wärmedämmschicht zur Aufnahme einer erfindungsgemässen Leerdose aus einem anderen Blickwinkel.
- Fig. 11: zeigt eine Ansicht des Setzwerkzeugs von der Rückseite her.
- Fig. 12: zeigt eine Seitenansicht des Setzwerkzeugs.
- Fig. 13: zeigt eine perspektivische Ansicht von der Bodenseite her eines zweiten Ausführungsbeispiels mit einer abgestuften Wandung des Dosenraums.
- Fig. 14: zeigt eine perspektivische Ansicht des zweiten Ausführungsbeispiels von der Öffnungsseite her.
- Fig. 15: zeigt einen Stapel von Leerdosen gemäss dem zweiten Ausführungsbeispiel.

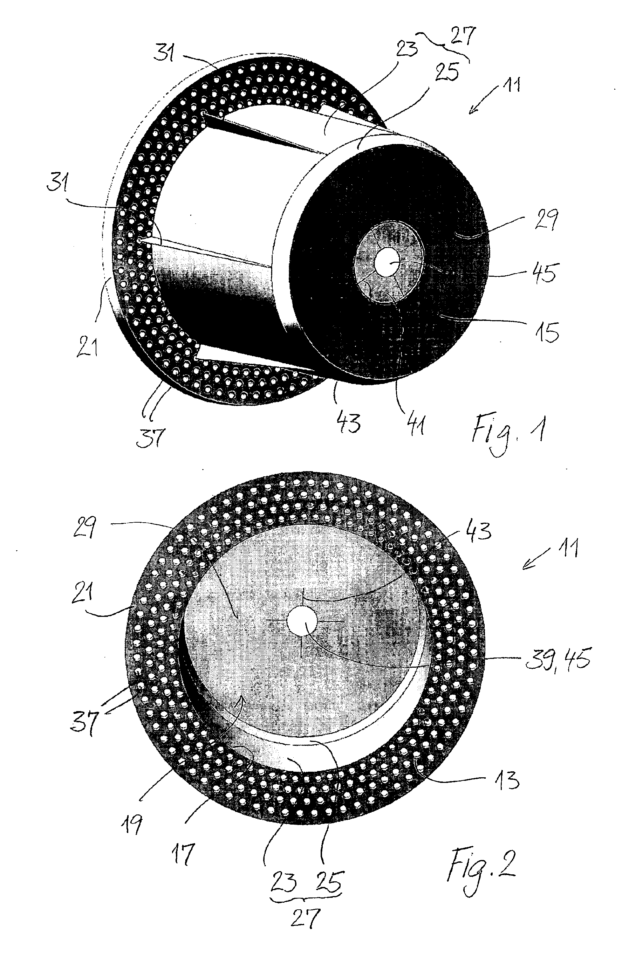

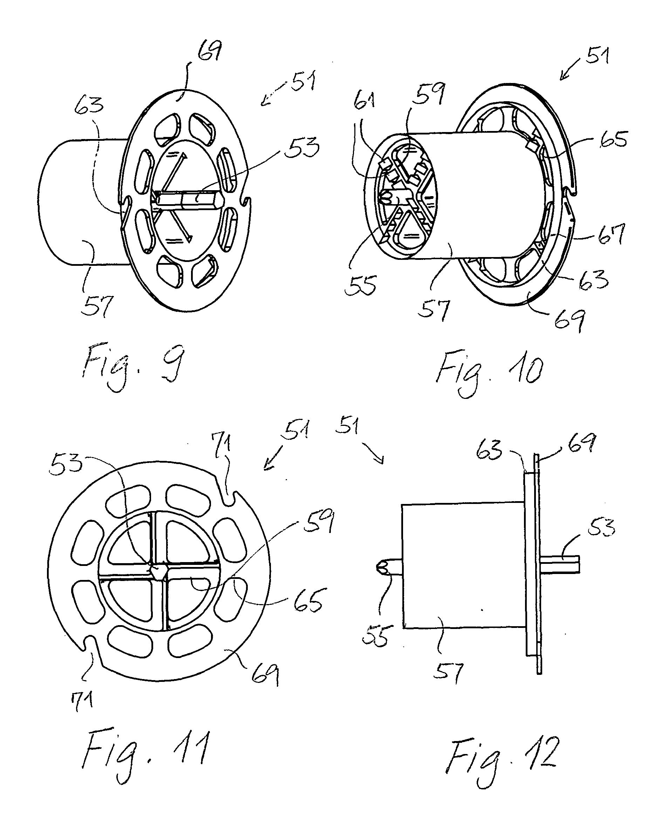

Die Leerdose 11 gemäss den Figuren 1 bis 8 und das Setzwerkzeug 51 gemäss den Figuren 9 bis 12 sind aufeinander abgestimmt in Bezug auf ihre Abmessungen. Die Leerdose 11 passt in die Bohrung, die mit dem Setzwerkzeug 51 in einer Wärmedämmschicht ausgeführt werden kann. Leerdose und Setzwerkzeug bilden daher zusammengehörige Teile eines System. Im Gegensatz zur Leerdose 11 ist das Setzwerkzeug 51 natürlich kein Verbrauchsmaterial.

Die Leerdose besitzt auf ihrer Frontseite 13 eine ringförmige Befestigungsplatte 21 um eine Zugangöffnung 17 zu einem Dosenraum 19. Um den Dosenraum 19 herum ist eine Wandung 27 ausgebildet. Der Dosenraum 19 ist an seinem Grund mit einem Boden 29 geschlossen.

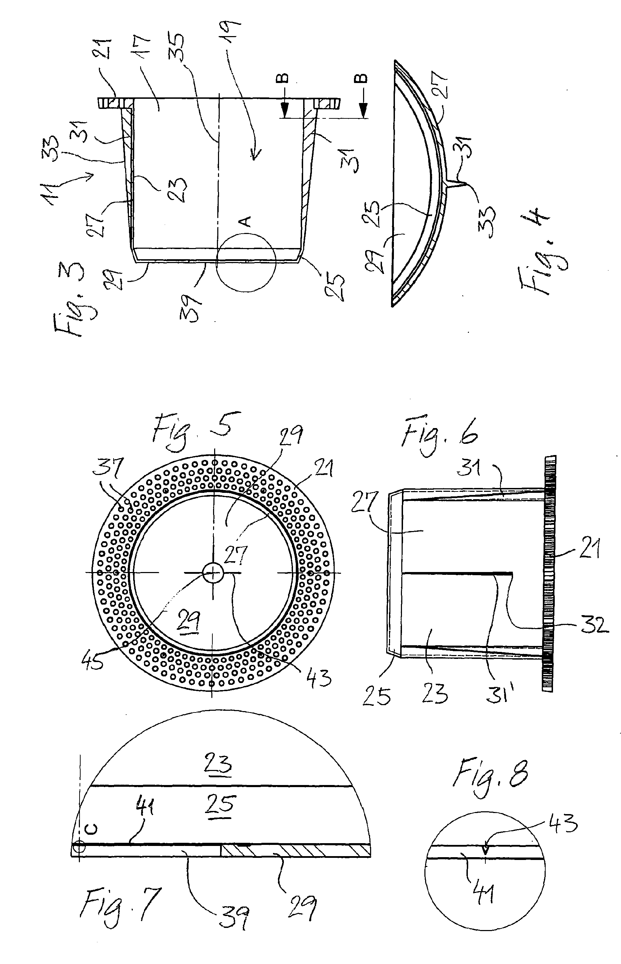

Damit die Leerdose 11 in eine Bohrung eingesetzt werden kann und darin hält ist ihre Form im Wesentlichen kreiszylindrisch. Die Form besteht in der dargestellten, bevorzugten Ausführung aus drei Teilen. Von der Frontseite 13 zur Rückseite 15 sind diese drei Teile die kreisförmige Befestigungsplatte 21, ein im Wesentlichen kreiszylindrischer Abschnitt 23 und ein kegelstumpfförmiger rückseitiger Abschluss 25 der Wandung 27, an welche Wandung der Boden 29 anschliesst. Die Wandung 27 ist auch im scheinbar kreiszylindrischen Abschnitt 23 leicht konisch ausgebildet (vergleiche Figur 4, in der die Knicklinie zwischen dem zylindrischen Abschnitt 23 und dem Kegelstumpf-Abschnitt 25 in Abstand zur geschnittenen Wandung 27 liegt), nur schon weil die Leerdose dadurch sehr einfach aus Kunststoff durch Spritzgiessen hergestellt werden kann. Die Leerdose ist aus einem Polyamid, insbesondere aus Polypropylen gegossen. Die leichte Konizität wäre aber auch bei einem Herstellungsverfahren durch Tiefziehen aus Aluminium gegeben und zweckmässig. Diese als Kunststoffteil dargestellte Leerdose könnte, mit entsprechend abgewandelten Details, ebenso gut aus Metall gefertigt sein.

Die Proportionen zwischen dem ersten Abschnitt 23 und dem zweiten Abschnitt 25 der Wandung 27 sind auch anders als abgebildet ausbildbar. Der erste Abschnitt braucht lediglich etwa 35 mm lang zu sein, während der zweite Abschnitt auch 20 bis 30 mm einnehmen kann. Je kürzer und je konischer der erste Abschnitt ausgebildet ist, umso dichter sind die Leerdosen ineinander stapelbar.

Auf der Aussenseite der Wandung 27 sind Rippen 31 ausgebildet. Diese sechs Rippen 31 sind in gleichmässigen Abständen über den Umfang der Wandung 27 verteilt angeordnet und sind parallel zur zentralen Körperachse 35 (Figur 3) der Leerdose gerichtet, beziehungsweise ihre Kanten 33 schneiden diese Körperachse 35. die Rippen 31 sind gerade ausgebildet, könnten aber auch als ein steiles Gewinde ausgebildet sein. Die Rippen 31 sind konisch, sich zur Rückseite hin verjüngend ausgebildet, damit sie beim Einpressen der Leerdose in eine Bohrung mit zunehmender Eindringtiefe mehr und mehr in die Wandung der Bohrung eingedrückt werden. Diese Rippen 31 schneiden trotz ihrer kantigen Ausführung nicht eigentlich in das Material der Wärmedämmschicht ein, sondern verdrängen dieses unter Verformung des Bohrungsquerschnittes. Das Material, sei es nun expandiertes Polystyrol (EPS-Platten) oder sei es mineralisches Fasermaterial (Steinwolleplatten, Glasfaserplatten), wird elastisch zurückgedrängt und presst dank seiner Elastizität kontinuierlich gegen die Leerdose.

In Figur 6 ist eine Rippe 31' dargestellt, die in Abstand zur Befestigungsplatte 21 endet. Sie bildet mit der freien Ecke 32 einen Widerhaken, der in das Material der Wärmedämmschicht einhakt.

Die ringförmige Befestigungsplatte 21 ist mit vier kreisförmigen Reihen von durchgehenden Löchern 37 perforiert. Diese Löcher 37 sind konisch, so dass ein darin aufschäumender Kleber einen die Ausziehkraft erhöhenden Formschluss mit der Innenwandung der Löcher 37 eingeht. Dank den kleinen Abständen zwischen zwei benachbarten Löchern ist die Montageplatte bei jeder Drehlage der Leerdose in einer horizontal und vertikal praktisch ausgerichteten Position einbaubar. Die Schrauben, mit denen die Montageplatte auf die Befestigungsplatte geschraubt werden, finden jedenfalls hinter der Verputzschicht eines der in der Befestigungsplatte vorhandenen Löcher.

Die Löcher 37 dienen auch der Materialersparnis und vor allem der Verhinderung von Schwundverformungen beim Aushärten des Kunststoffs und dadurch einer kürzeren Taktzeit beim Spritzgiessen. Ferner dienen sie auch der Möglichkeit der besseren Klebeverbindung zwischen Untergrund und Kunststoffteil.

Im Boden 29 ist eine Durchtrittstelle 39 für eine elektrische Leitung vorgesehen. Diese ist als Membrane 41 mit Sollreiss-Stellen 43 ausgebildet. Im Schnittpunkt der Sollreiss-Stellen 43 ist eine Durchtrittöffnung 45 ausgebildet, die dem Durchmesser eines einfachen Kabels entsprechend dimensioniert ist und durch dickere Kabel aufgeweitet werden kann, indem die Membrane 41 entlang den Kerben der Sollreiss-Stellen 43 auseinandergerissen wird.

Das in den Figuren 9 bis 12 dargestellte Setzwerkzeug 51 besitzt einen Schaft 53, dessen rückseitiges Ende als Einspannteil dient und dessen Spitze 55 als Bohrspitze dient. Das Setzwerkzeug besitzt weiter eine erste Schneide zum Bohren einer inneren, tieferen Bohrung. Diese erste Schneide weist ein Kreismesser 57 mit einem Durchmesser auf, der dem Durchmesser des Bodens 29 entspricht. Zwischen Schaft 53 und Kreismesser 57 sind Speichen 59 ausgebildet, an denen Ausbrechzähne 61 ausgebildet sind. Das Kreismesser 57 schneidet den äusseren Rand der Bohrung, die Ausbrechzähne 61 brechen das in der Bohrung vorliegende Material aus. Es kann dies, wie oben beschrieben ein Schaumstoff in der Art von EPS oder ein Mineralfasermaterial sein.

Am Setzwerkzeug ist weiter eine zweite Stufe ausgebildet. Diese besitzt eine zweite Schneide mit einem zweiten Kreismesser 63, zweiten Speichen 65 und zweiten Ausbrechzähnen 67. Der Durchmesser der zweiten Stufe ist auf den Durchmesser der Befestigungsplatte 21 abgestimmt, das heisst ihr Kreismesser 63 hat einen um einen Millimeter geringeren Durchmesser als die Befestigungsplatte 21. Dadurch sitzt die Befestigungsplatte satt in der durch diese zweite Schneide ausgehobenen Bohrung.

Weiter umfasst das Setzwerkzeug einen Tiefenanschlag 69. Der Tiefenanschlag übersteht die zweite Schneide. In diesem überstehenden Kragen des Tiefenanschlags sind Auswurfschlitze 71 ausgebildet. Diese Auswurfschlitze 71 arbeiten zwischen dem Tiefenanschlag und der Wärmedämmschicht liegende Bruchstücke des Materials der Wärmedämmschicht aus dem Anschlagbereich des Tiefenanschlags und gewährleisten so, dass der Tiefenanschlag 69 beim Bohren mit seiner Anschlagseite bis dicht an die Wärmedämmschicht angeschlagen werden kann.

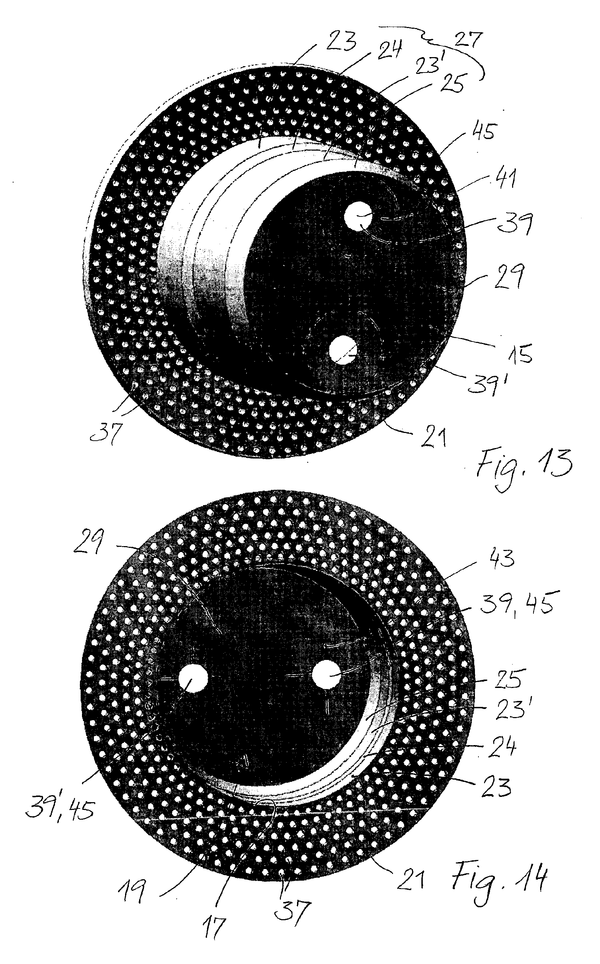

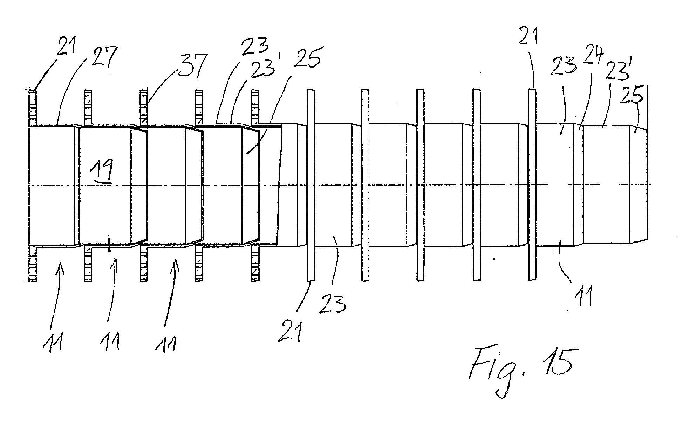

Die Leerdose gemäss den Figuren 13 bis 15 besitzt wie das erste Ausführungsbeispiel auf ihrer Frontseite 13 eine ringförmige Befestigungsplatte 21 um eine Zugangöffnung 17 zu einem Dosenraum 19. Um den Dosenraum 19 herum ist eine Wandung 27 ausgebildet. Der Dosenraum 19 ist an seinem Grund mit einem Boden 29 geschlossen.

Damit die Leerdose 11 in eine Bohrung eingesetzt werden kann und darin hält ist ihre Form im Wesentlichen kreiszylindrisch. Die Form besteht in der dargestellten, bevorzugten Ausführung aus fünf Teilen. Von der Frontseite 13 zur Rückseite 15 sind diese fünf Teile die kreisförmige Befestigungsplatte 21, ein im Wesentlichen kreiszylindrischer erster Abschnitt 23, ein kegelstumpfförmiger zweiter Abschnitt 24, ein im Wesentlichen kreiszylindrischen dritten Abschnitt 23', und ein kegelstumpfförmiger rückseitiger Abschluss 25 der Wandung 27, an welche Wandung der Boden 29 anschliesst. Die Wandung 27 ist auch in den scheinbar kreiszylindrischen Abschnitten 23 und 23' leicht konisch ausgebildet, nur schon weil die Leerdose dadurch sehr einfach aus Kunststoff durch Spritzgiessen hergestellt werden kann. Diese als Kunststoffteil dargestellte Leerdose könnte, mit entsprechend abgewandelten Details, ebenso gut aus Metall gefertigt sein.

Die Proportionen zwischen dem ersten Abschnitt 23, dem zweiten Abschnitt 24, dem dritten Abschnitt 23' und dem letzten Abschnitt 25 der Wandung 27 sind auch anders als abgebildet ausbildbar. Der erste Abschnitt 23 ist hier lediglich etwa 20 mm lang (Gemessen am der Frontseite der Befestigungsplatte 21), während der konische zweite Abschnitt 24 5 bis 6 mm einnimmt. Der dritte Abschnitt 23' ist etwa 28 mm lang. Der konische Schlussabschnitt 25 ist knapp 10 mm lang.

Die Leerdosen sind ineinander stapelbar. Der Aussendurchmesser des dritten Abschnitts 23' ist maximal so gross wie der Innendurchmesser des ersten Abschnitts 23. Die konkreten Werte des vorliegenden Ausführungsbeispiels sind: Aussendurchmesser des Abschnittes 23': 65.2 mm, Innendurchmesser des Abschnittes 23: 65.6 mm. Der Aussendurchmesser des ersten Abschnittes 23 ist mit 68 mm gleich wie beim ersten Ausführungsbeispiel. Da im Bereich des dritten Abschnitts die Wandung kaum belastet ist, kann dort die Wandungsstärke auf 0,6 mm reduziert sein. Der Innendurchmesser kann daher 64 mm aufweisen.

Der halbe Scheitelwinkel der konischen Abschnitte 24 und 25 ist um 15° gewählt. Der halbe Scheitelwinkel in den im Wesentlichen kreiszylindrischen Abschnitten 23,23', wie auch auf der Aussenseite der Befestigungsplatte 21 ist um 1° gewählt.

Bei diesem Ausführungsbeispiel wurde auf die Ausbildung von Rippen verzichtet. Die ringförmige Befestigungsplatte 21 ist mit sechs kreisförmigen Reihen von durchgehenden Löchern 37 perforiert. Der Aussenradius der Befestigungsplatte ist bei 106 mm gewählt, so dass die Montageplatte eines in der Leerdose zu montierenden Elektroteils auch etwas exzentrisch angeordnet sein kann und die Befestigungsschrauben dennoch eines der Löcher in der Montageplatte finden.

Im Boden 29 sind zwei Durchtrittstellen 39,39' für elektrische Leitungen vorgesehen. Diese sind ausgebildet wie die Durchtrittstellen im ersten Ausführungsbeispiel. Es könnten auch drei Durchtrittstellen vorgesehen sein.

Zusammenfassend kann gesagt werden, das die Erfindung eine Elektro-Leerdose 11 mit einem Dosenraum 19 und das Versetzen einer solchen Dose betrifft. Der Dosenraum 19 ist von einer quasi kreiszylindrischen Wandung 27 umgeben. Mit einem auf den Durchmesser dieser Wandung abgestimmten Setzwerkzeug wird eine Bohrung in eine Wärmedämmschicht eingebracht. Die Leerdose 11 wird danach in die Bohrung eingepresst und hält darin infolge einer Verklemmung zwischen der Wandung 27 und der Wärmedämmschicht. Die Elektro-Leerdose 11 mit dem Dosenraum 19, der von einer Wandung 27 umgeben und an seinem Grund einen rückseitigen Boden 29 aufweist, besitzt eine frontseitige Zugangsöffnung 17 zu diesem Dosenraum 19. Um diese Zugangsöffnung 17 herum ist eine Befestigungsplatte 21 vorhanden und sind Befestigungsbereiche ausgebildet. An den Befestigungsbereichen kann eine Montageplatte eines Einbauteils befestigt werden. Die Befestigungsbereiche umschliessen die Zugangsöffnung 17 ringförmig. Sie sind durch eine Vielzahl von Löchern 37 in der ringförmigen Befestigungsplatte gebildet, welche siebartig oder wabenartig angeordnet sind. Vorteil dieser Ausbildung des Befestigungsbereichs ist, dass die Leerdose 11 in beliebiger Stellung in eine abgestufte Bohrung in einer Wärmedämmschicht eingepresst werden kann. Die Befestigungsplatte 21 füllt die äussere Stufe der Bohrung, so dass die Wärmedämmschicht bis an die Zugangsöffnung heran verputzt werden kann. Eine Montageplatte kann horizontal und vertikal möglichst ausgerichtet und dann im Befestigungsbereich mit der Befestigungsplatte verschraubt werden. Dabei wird die Montageplatte in denjenigen Löchern der Befestigungsplatte 21 festgemacht, die dabei zufällig von der Schraube gefunden werden.

## Patentansprüche

**1.** Elektro-Leerdose (11) mit einem Dosenraum (19), der von einer Wandung (27) umgeben und an seinem Grund einen rückseitigen Boden (29) aufweist, und welche Leerdose (11) eine frontseitige Zugangsöffnung (17) zu diesem Dosenraum (19) besitzt, um welche Zugangsöffnung (17) herum eine Befestigungsplatte (21) vorhanden ist und Befestigungsbereiche (21) ausgebildet sind, an welchen Befestigungsbereichen (21) eine Montageplatte eines Einbauteils befestigt werden kann,
**dadurch gekennzeichnet, dass** die Befestigungsbereiche die Zugangsöffnung (17) ringförmig umschliessen und durch die ringförmige Befestigungsplatte gebildet sind.

**2.** Leerdose nach Anspruch 1, **dadurch gekennzeichnet, dass** die Befestigungsplatte eine minimale Materialstärke von 3 mm, vorzugsweise 4 mm aufweist.

**3.** Leerdose nach Anspruch 1 oder 2, **dadurch gekennzeichnet, dass** in der Befestigungsplatte eine Struktur ausgebildet ist, insbesondere eine Lochung.

**3.** Leerdose nach einem der Ansprüche 1 oder 2, **dadurch gekennzeichnet, dass** die Wandung (27) abgestuft ist und zwei im Wesentlichen zylindrische Bereiche (23,23') aufweist, von denen der bodennähere Bereich (23') einen geringeren Durchmesser besitzt als der öffnungsnähere erste Bereich (23).

**4.** Leerdose nach Anspruch 3, **dadurch gekennzeichnet, dass** zwischen dem ersten zylindrischen Bereich (23) und dem bodennäheren zylindrischen Bereich (23') ein kegelstumpfförmiger Bereich (24) ausgebildet ist, der die unterschiedlichen Durchmesser der beiden zylindrischen Bereiche (23,23') ineinander überführt.

**5.** Leerdose nach Anspruch 4, **dadurch gekennzeichnet, dass** die Wandung (27) im bodennäheren zylindrischen Bereich (23') weniger stark ausgebildet ist als im ersten zylindrischen Bereich (23).

**6.** Leerdose nach einem der Ansprüche 1 bis 5, **dadurch gekennzeichnet, dass** die Wandung (27) in einem an den Boden (29) anschliessenden Bereich (25) der Wandung (27) einen Kegelstumpf bildet.

**7.** Leerdose nach einem der Ansprüche 1 bis 6, **dadurch gekennzeichnet, dass** im Boden (29) wenigstens eine Kabeldurchführungsstelle (39) ausgebildet ist.

**8.** Leerdose nach Anspruch 7, **dadurch gekennzeichnet, dass** an der Kabeldurchführungsstelle (39) der Boden (29) als eine Membrane (41) ausgebildet ist, deren Dicke zwischen 0,07 und 0,3 mm ist, insbesondere zwischen 0.15 und 0,25 mm.

**9.** Leerdose nach Anspruch 8, **dadurch gekennzeichnet, dass** in der Membrane (41) Sollbruchstellen (43) ausgebildet sind, entlang welchen die Membrane unter Belastung aufreissen kann.

**10.** Verfahren zur Anordnung einer Leerdose (11) in einer Wärmedämmplatte einer Wärmedämmschicht, **dadurch gekennzeichnet, dass** mit einem Setzwerkzeug (51) eine abgestufte kreiszylindrische Bohrung von der Vorderseite der Wärmedämmplatte in die Wärmedämmplatte eingebracht wird, deren erste Stufe einen der Leerdose (11) angepassten Durchmesser und eine der Leerdose (11) angepasste Tiefe aufweist, und deren zweite Stufe einen der ringförmigen Befestigungsplatte (21) angepassten Durchmesser und eine der ringförmigen Befestigungsplatte (21) angepasste Tiefe aufweist, und danach die Leerdose (11) in diese abgestufte Bohrung in der Wärmedämmplatte eingepresst wird.

**11.** Verfahren nach Anspruch 10, **dadurch gekennzeichnet, dass** an einem Untergrund eine Dosenstelle markiert wird und eine Elektroleitung bis zur Dosenstelle verlegt wird, dass der Ort der Dosenstelle auf eine Wärmedämmplatte übertragen wird, die Wärmedämmplatte an diesem Ort mit der Bohrung versehen und durchstossen wird, die Elektroleitung von der Rückseite der Wärmedämmplatte her durch diese Wärmedämmplatte hindurchgeführt wird, die Wärmedämmplatte auf diesem Untergrund befestigt wird, während die Elektroleitung durch die Wärmedämmplatte hindurch gezogen wird.

**12.** Verfahren nach einem der Ansprüche 10 oder 11, **dadurch gekennzeichnet, dass** die Leerdose (11) in die Bohrung geklebt wird.

**13.** Verfahren nach Anspruch 12, **dadurch gekennzeichnet, dass** die Leerdose (11) mit einem pastösen PU-Kleber in die Bohrung geklebt wird.
